(19) Europäisches Patentamt
European Patent Office
Office européen des brevets

(11) **EP 3 482 661 B1**

(12) **EUROPÄISCHE PATENTSCHRIFT**

(45) Veröffentlichungstag und Bekanntmachung des Hinweises auf die Patenterteilung:
**26.05.2021   Patentblatt 2021/21**

(51) Int Cl.:
**A47J 36/32** *(2006.01)*      **G01K 7/42** *(2006.01)*

(21) Anmeldenummer: **18163558.2**

(22) Anmeldetag: **23.03.2018**

(54) **VERFAHREN ZUR ANPASSUNG EINER HEIZLEISTUNG WENIGSTENS EINES HEIZELEMENTES EINES HAUSGERÄTS**

METHOD FOR ADAPTING A HEATING OUTPUT OF AT LEAST ONE HEATING ELEMENT OF A DOMESTIC APPLIANCE

PROCÉDÉ DE RÉGLAGE D'UNE PUISSANCE DE CHAUFFAGE D'AU MOINS UN ÉLÉMENT CHAUFFANT D'UN APPAREIL ÉLECTROMÉNAGER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.11.2017   EP 17201487**

(43) Veröffentlichungstag der Anmeldung:
**15.05.2019   Patentblatt 2019/20**

(73) Patentinhaber: **Vorwerk & Co. Interholding GmbH**
**42270 Wuppertal (DE)**

(72) Erfinder:
• **Yan, Wenjie**
**40476 Düsseldorf (DE)**

• **Lang, Torsten**
**42657 Solingen (DE)**
• **Stach, Christiane**
**42477 Radevormwald (DE)**
• **Kraut-Reinkober, Stefan**
**51375 Leverkusen (DE)**

(74) Vertreter: **Patentanwälte Bals & Vogel**
**Universitätsstrasse 142**
**44799 Bochum (DE)**

(56) Entgegenhaltungen:
**EP-A1- 2 388 564      DE-A1-102010 000 299**
**DE-A1-102010 037 769    JP-A- S61 191 322**
**US-A- 5 575 194**

**Beschreibung**

Die vorliegende Erfindung betrifft ein Verfahren zur Anpassung einer Heizleistung wenigstens eines Heizelementes eines Hausgeräts. Ferner bezieht sich die Erfindung auf ein System, ein Hausgerät sowie ein Computerprogrammprodukt.

Es ist aus dem Stand der Technik bekannt, dass bei Hausgeräten und insbesondere bei Küchenmaschinen eine Erhitzung eines Lebensmittels durchgeführt wird, während das Lebensmittel manuell oder durch das Hausgerät zubereitet wird. Bspw. kann während eines Betriebs eines Rührwerks, z. B. während eines Rührvorgangs bei einer Suppe oder dergleichen, die Erhitzung erfolgen. Dabei wird üblicherweise eine Soll-Temperatur durch einen Benutzer des Hausgeräts vorgegeben, auf die das Medium im Aufnahmeraum, insbesondere Rührgefäß, erhitzt werden soll. Hierzu kann eine Heizregelung bei einem Heizelement des Hausgeräts durchgeführt werden, welche eine gemessene Temperatur bspw. in dem Rührgefäß als Regelgröße verwendet. Zur Erfassung der Temperatur wird bspw. ein elektrischer Temperatursensor, wie ein temperaturabhängiger Widerstand, eingesetzt EP2388564A1 offenbart ein Hausgerät mit Heizleistungsanpassung.

Eine große technische Herausforderung liegt bei derartigen Anwendungen darin, dass ein solcher Temperatursensor nur eine lokale Temperatur messen kann, welche von der tatsächlichen Temperatur des Mediums abweicht. Bspw. ist der Temperatursensor in einem (Rührgefäß-) Boden integriert, und steht somit nicht in direktem Kontakt mit dem Medium (im Rührgefäß), also dem zubereiteten Lebensmittel. Eine weitere Schwierigkeit liegt darin, dass die Wärme im Aufnahmeraum des Lebensmittels bzw. im Rührgefäß ggf. nicht gleichmäßig verteilt ist, insbesondere wenn ein Motor eines Rührwerks im Rührgefäß nicht oder nur langsam sich dreht oder der Füllstand des Lebensmittels im Rührgefäß zu groß ist. Grundsätzlich ist es daher ein Problem, dass die (insbesondere bei einem Rührgefäß) gemessene Temperatur, welche zur Heizregelung bei dem Hausgerät, insbesondere der Küchenmaschine, genutzt wird, von der tatsächlichen Temperatur eines Mediums im Aufnahmeraum bzw. im Rührgefäß abweicht. Auch ist ein Problem, dass die Erhitzung des Mediums anhand der gemessenen Temperatur nur unzuverlässig und langsam erfolgt.

Es ist daher eine Aufgabe der vorliegenden Erfindung, die voranstehend beschriebenen Nachteile zumindest teilweise zu beheben. Insbesondere ist es Aufgabe der vorliegenden Erfindung, eine verbesserte Anpassung einer Heizleistung eines Hausgeräts, und insbesondere einer Küchenmaschine, vorzuschlagen.

Die voranstehende Aufgabe wird gelöst durch ein Verfahren mit den Merkmalen des unabhängigen Verfahrensanspruchs, durch ein System mit den Merkmalen des unabhängigen Systemanspruchs, durch ein Hausgerät mit den Merkmalen des nebengeordneten Vorrichtungsanspruchs sowie durch ein Computerprogrammprodukt mit den Merkmalen des weiteren nebengeordneten Vorrichtungsanspruchs. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen System, dem erfindungsgemäßen Hausgerät sowie dem erfindungsgemäßen Computerprogrammprodukt, und jeweils umgekehrt, so dass bezüglich der Offenbarung zu den einzelnen Erfindungsaspekten stets wechselseitig Bezug genommen wird bzw. werden kann.

Die Aufgabe wird gelöst durch ein Verfahren zur Anpassung einer Heizleistung wenigstens eines Heizelementes, z. B. einer Widerstandsheizung oder einer Dickschichtheizung oder einer Induktionsspule oder dergleichen, eines Hausgeräts, insbesondere einer Küchenmaschine, wobei vorzugsweise die Anpassung der Heizleistung zur Heizregelung durchgeführt wird. Die Heizleistung kann bei dem Heizelement angepasst werden, indem bspw. eine elektrische Energiezufuhr zum Heizelement geregelt wird. Auf diese Weise kann eine Erhitzung des Heizelements oder mittels des Heizelements bewirkt werden, um ein Medium in einem Aufnahmeraum des Hausgeräts, insbesondere in einem Rührgefäß der Küchenmaschine, zu erhitzen. Das Medium umfasst dabei z. B. wenigstens ein Lebensmittel im Aufnahmeraum (z. B. in einem Topf der Küchenmaschine).

Hierbei ist insbesondere vorgesehen, dass das Hausgerät, insbesondere die Küchenmaschine, zur zumindest teilweise automatischen Zubereitung von Lebensmitteln ausgeführt ist, bspw. durch einen Aufnahmeraum, insbesondere ein Rührgefäß oder ein Ofenraum, zur Aufnahme des Lebensmittels und/oder durch ein Rührwerk zum Rühren des Lebensmittels und/oder durch das Heizelement zur Erwärmung des Lebensmittels.

Ferner kann das Hausgerät, insbesondere die Küchenmaschine, einen Temperatursensor zur Messung einer Temperatur bei dem Aufnahmeraum, insbesondere dem Rührgefäß der Küchenmaschine, aufweisen. Der Temperatursensor und/oder das Heizelement sind bspw. in einem Boden für den Aufnahmeraum, insbesondere dem Boden des Rührgefäßes oder einer Herdplatte oder einen Ofenboden, integriert, wobei der Temperatursensor ggf. auch im Heizelement integriert sein kann. Zur automatischen Zubereitung kann bspw. eine Ansteuerungsvorrichtung vorgesehen sein, welche anhand eines vorgegebenen Rezepts oder einer Benutzereingabe das Rührwerk und/oder das Heizelement ansteuert.

Bei dem erfindungsgemäßen Verfahren Z werden die nachfolgenden Schritte durchgeführt :

    a) Durchführen einer Aufheizphase mit einer derartigen Heizleistungsanpassung (des Heizelements), dass die (gemessene) Temperatur (insbesondere als Ist-Temperatur) eine vorgegebene Soll-Temperatur anstrebt, insbesondere durch eine Heizregelung, wobei vorzugsweise die Temperatur regelmäßig und/oder zyklisch durch den Temperatursensor gemessen wird,

b) Durchführen einer Temperaturhaltungsphase, wenn die (Ist-) Temperatur die Soll-Temperatur erreicht hat, wobei in der Temperaturhaltungsphase eine Heizleistungsbegrenzung erfolgt,

c) Durchführen wenigstens einer Auswertung der (Ist-) Temperatur anhand der Soll-Temperatur während der Temperaturhaltungsphase, sodass ein Auswertungsergebnis bestimmt wird,

d) Durchführen einer Stabilisierungsphase, wenn das Auswertungsergebnis ein Stabilisierungskriterium erfüllt, wobei vorzugsweise in der Stabilisierungsphase die Heizleistungsanpassung derart erfolgt, dass die (Ist-) Temperatur eine bestimmte Stabilisierungstemperatur anstrebt, wobei die Stabilisierungstemperatur größer ist als die Soll-Temperatur.

In anderen Worten kann die Stabilisierungstemperatur eine neue Soll-Temperatur sein, welche einen höheren Temperaturwert aufweist, als die ursprüngliche vorgegebene Soll-Temperatur. Hierdurch kann eine Art Übersteuerung der Heizleistungsanpassung bzw. Heizregelung erfolgen. Dies hat den Vorteil, dass durch eine einfache und kostengünstige Anpassung der Heizleistungsanpassung bzw. Heizregelung die Medientemperatur schneller den gewünschten Temperaturwert erreichen kann. Hierzu kann ein Temperatur- und/oder zeitabhängiges Stabilitätskriterium festgelegt werden, welches bspw. empirisch ermittelt wird und/oder durch einen Benutzer vorgegeben wird. Besonders vorteilhafte Beispiele für ein solches Stabilitätskriterium werden dabei auch nachfolgend diskutiert.

Ferner ist es möglich, dass das erfindungsgemäße Verfahren und/oder die Schritte des Verfahrens iterativ durchgeführt werden, insbesondere während einer Zubereitung eines Lebensmittels, um so die Zubereitung zu optimieren.

Insbesondere werden dabei die Schritte b), c) und d) iterativ durchgeführt, vorzugsweise bis das Stabilisierungskriterium nicht mehr erfüllt ist. Wenn das Stabilisierungskriterium nicht mehr erfüllt ist (also insbesondere das Auswertungsergebnis das Stabilisierungskriterium nicht mehr erfüllt), kann gemäß einem weiteren Schritt e) dann ggf. (erneut) eine Temperaturhaltungsphase durchgeführt werden. Ein konkretes Beispiel für das Stabilisierungskriterium wird im Weiteren näher erläutert.

Das Hausgerät kann z. B. als eine Küchenmaschine und/oder als ein Haushaltsgerät und/oder als ein Küchengerät und/oder als ein Ofen und/oder als ein Herd und/oder dergleichen ausgebildet sein, und vorzugsweise einen Aufnahmeraum aufweisen, in welchem Lebensmittel manuell oder automatisiert zubereitet werden. Dazu kann das Lebensmittel z. B. auf einen Boden des Aufnahmeraums positioniert werden. Als Heizelement kann daher z. B. auch eine elektrische Vorrichtung, z. B. eine Heizplatte, ggf. auch für die Nutzung einer Induktionserwärmung angesehen werden. Der Aufnahmeraum kann entsprechend auch ein Ofenraum, Garraum oder eine Herdplatte oder ein Rührgefäß oder dergleichen sein.

Besonders vorteilhaft kann es sein, dass das erfindungsgemäße Verfahren als ein intelligentes Verfahren verstanden wird, welches zur Zubereitung, insbesondere zum Kochen, von Lebensmitteln durch das Hausgerät, insbesondere die Küchenmaschine, dient. Hierzu kann ein Unterschied zwischen einer gemessenen Temperatur und der Medientemperatur ermittelt und/oder durch einen iterativen Vorgang das Lebensmittel schnell auf die Soll-Temperatur erhitzt werden. Insbesondere wird dabei unter dem Medium das wenigstens eine Lebensmittel im Aufnahmeraum, insbesondere im Rührgefäß, verstanden.

Es ist denkbar, dass beim Kochen (insbesondere mit einer niedrigen Motorgeschwindigkeit eines Rührwerks in einem Rührgefäß einer Küchenmaschine und/oder mit einer hohen Füllmenge eines Mediums in dem Rührgefäß) ein großer Temperaturunterschied zwischen einer gemessenen Temperatur und einer tatsächlichen Temperatur des Mediums auftritt. Dies ist z. B. damit zu begründen, dass ein Temperatursensor, insbesondere ein NTC-Sensor (also ein Heißleiter), aus konstruktiven Gründen nicht unmittelbar im Medium messen kann, sondern nur in der Nähe zum Medium angeordnet ist (z. B. in einem Boden des Rührgefäßes). Ein weiterer Grund kann sein, dass sich die Wärme nur langsam auf das gesamte Medium überträgt. Herkömmlicherweise wird dabei die Heizregelung derart ausgeführt, dass die Heizung mit dem Heizelement nur gegen die Solltemperatur geregelt wird. Dies führt dazu, dass der Unterschied lange erhalten bleibt, es kommt also nur langsam zur Annäherung.

Insbesondere wurde festgestellt, dass sich diese Annäherung beschleunigt, wenn die Soll-Temperatur kurzzeitig erhöht wird. Es können daher bspw. drei Phasen genutzt werden, um eine verbesserte Heizanpassung durchzuführen: ein Aufheizen (d. h. eine Aufheizphase), eine Stabilisierung (d. h. eine Stabilisierungsphase) und eine Temperaturhaltung (d. h. eine Temperaturhaltungsphase). Für jede dieser Heizphasen kann wenigstens ein Parameter definiert werden, d. h. es kann eine Parametrisierung dieser Phasen erfolgen. So kann für die Temperaturhaltungsphase B eine Leistungsbegrenzung zur Heizleistungsbegrenzung definiert werden (z. B. mit 40 % oder 80 % der höchsten Leistung, also einer Maximalleistung).

Es kann vorgesehen sein, dass für jeden Kochvorgang (also für jede Zubereitung) bei dem Hausgerät, insbesondere der Küchenmaschine, zunächst die Aufheizphase durchgeführt wird. Dabei kann eine Heizleistungsanpassung, insbesondere Heizregelung, derart erfolgen, dass die gemessene Temperatur schnellstmöglich die Soll-Temperatur erreicht. Wenn die gemessene Temperatur die Soll-Temperatur erreicht hat, kann die Heizleistungsanpassung zur Temperaturhaltungsphase übergehen. Hierbei kann die Heizregelung mit einer begrenzten maximalen Leistung (z. B. maximal 40 % oder maximal 80 %) gemäß der Heizleistungsbegrenzung erfolgen. Dann wird hierbei weiter die Temperatur gemessen, z. B. die niedrigste gemessene Temperatur wird gespeichert, und falls eine Differenz zwischen der niedrigsten Temperatur und der Zieltemperatur (z. B. die Soll-Temperatur) einen Schwellenwert überschreitet, dann wechselt die Heizleistungsanpassung zur Stabilisierungsphase. Für die Stabilisierungsphase kann eine neue Soll-Temperatur (Stabilisierungstemperatur) festgelegt werden.

Sodann ist es denkbar, dass die Heizleistungsanpassung in der Stabilisierungsphase die Heizleistung gegen diese neue Soll-Temperatur regelt und ggf. hierbei ein Timer mitläuft. Wenn anhand des Timers eine Überschreitung einer Zeitdauer, insbesondere Stabilisierungszeit, detektiert wird, kann die Heizleistungsanpassung wieder zur Temperaturhaltungsphase wechseln. Auch kann zur Temperaturhaltungsphase gewechselt werden, wenn die gemessene Temperatur die neue Soll-Temperatur überschreitet und/oder das Stabilisierungskriterium nicht mehr erfüllt ist. Diese Phasenwechsel können ggf. mehrmals automatisch auftreten.

Insbesondere kann es dabei möglich sein, dass bei einem erneuten Einstellen einer Soll-Temperatur (z. B. durch einen Benutzer) auf einen anderen Wert die Aufheizphase wieder von neuem beginnt. Auch kann die Aufheizphase wieder erneut beginnen, wenn eine niedrigsten gemessene Temperatur mit einem vordefinierten Abstand unterhalb der Soll-Temperatur liegt.

Es kann von Vorteil sein, wenn im Rahmen der Erfindung die Stabilisierungstemperatur anhand des Auswertungsergebnisses bestimmt wird, wobei vorzugsweise die Stabilisierungstemperatur durch einen Maximaloffset begrenzt wird. In anderen Worten kann die Stabilisierungstemperatur variabel sein, und z.B. in Abhängigkeit von der Soll-Temperatur und/oder von der gemessenen Temperatur sein. Auch kann es möglich sein, dass zur Bestimmung der Stabilisierungstemperatur eine Steigung einer Kurve von gemessenen Temperaturwerten der gemessenen Temperatur herangezogen wird. Durch die Nutzung eines Maximaloffsets als ein maximaler Wert für die Stabilisierungstemperatur kann zudem die Stabilität des erfindungsgemäßen Verfahrens erhöht werden.

Auch ist es optional denkbar, dass zur Heizleistungsbegrenzung die Heizleistungsanpassung derart erfolgt, dass die Heizleistung auf eine vorgegebene Maximalhalteheizleistung begrenzt ist, wobei bei der Aufheizphase und/oder der Stabilisierungsphase die Heizleistungsanpassung, insbesondere als eine Heizleistungsregelung, derart erfolgt, dass die Heizleistungsbegrenzung aufgehoben ist, und insbesondere somit die Heizleistung maximal der Maximalheizleistung entsprechen kann, und/oder bei der Stabilisierungsphase die Heizleistungsanpassung derart erfolgt, dass die Heizleistungsbegrenzung auf einen höheren Wert als bei der Temperaturhaltungsphase begrenzt ist.. Auch kann es möglich sein, dass die Heizleistung in der Aufheizphase und/oder der Stabilisierungsphase auf einen anderen Begrenzungswert begrenzt wird. Entscheidend kann hierbei sein, dass die Heizleistung in der Temperaturhaltungsphase stets geringer ist als in der Aufheizphase und/oder der Stabilisierungsphase. Dies ermöglicht eine effiziente und schnelle Homogenisierung der Temperatur im Medium.

Ferner kann im Rahmen der Erfindung vorgesehen sein, dass bei der Heizleistungsbegrenzung, insbesondere für die Temperaturhaltungsphase, die Heizleistung auf eine vorgegebene Maximalhalteheizleistung im Bereich von 10 % bis 90 %, vorzugsweise 20 % bis 70 %, bevorzugt 30 % bis 60 %, besonders bevorzugt 40 % bis 50%, insbesondere 35 %, einer Maximalheizleistung begrenzt ist. Bspw. ist die Maximalheizleistung eine solche Heizleistung, welche maximal durch die Heizregelung des Hausgeräts, insbesondere der Küchenmaschine, bereitgestellt werden kann.

Vorzugsweise kann vorgesehen sein, dass bei der Temperaturhaltungsphase zur Temperaturüberwachung ein oder mehrere Temperaturwerte durch wenigstens eine Messung der Temperatur ermittelt werden, wobei bei Schritt c) die Auswertung dadurch erfolgt, dass eine Differenz des ermittelten Temperaturwertes oder einer der ermittelten Temperaturwerte, insbesondere eines Minimums der Temperaturwerte, und der Soll-Temperatur bestimmt wird, wobei vorzugsweise die Differenz das Auswertungsergebnis bildet. Auch kann es möglich sein, dass der Vergleich der Differenz mit einem Schwellenwert, welcher z.B. vordefiniert sein kann, das Auswertungsergebnis bildet. Von Vorteil ist es ferner, wenn das Minimum der Temperaturwerte aus mindestens zwei oder mindestens fünf oder mindestens zehn oder mindestens 100 oder mindestens 120 Temperaturwerten ermittelt wird. Dies ermöglicht eine zuverlässige Durchführung der Stabilisierungsphase.

Die im Rahmen dieser Erfindung erwähnte Operation der Bildung eines Minimums kann bspw. anhand sämtlicher Temperaturwerte ermittelt werden, welche in einer entsprechenden Phase (in der das Minimum gebildet wird) ermittelt wurden.

Vorteilhafterweise kann im Rahmen der Erfindung vorgesehen sein, dass während der Stabilisierungsphase eine zeitliche Stabilisierungsdauer der Durchführung der Stabilisierungsphase ermittelt wird, wobei der nachfolgende Schritt nach Schritt d) vorgesehen ist:

- Durchführen eines Wechsels von der Stabilisierungsphase in die Temperaturhaltungsphase, wenn die ermittelte zeitliche Stabilisierungsdauer eine bestimmte Stabilisierungszeitvorgabe übersteigt.

Bspw. kann die zeitliche Stabilisierungsdauer anhand eines Timers (z.B. eines entsprechenden elektronischen Bausteins zur Zeitermittlung) bestimmt werden. Die Stabilisierungszeitvorgabe kann dabei gegebenenfalls auch vorgespeichert, z.B. in einer elektronischen Speichereinheit, vorliegen. Sowohl die Speichereinheit als auch der Timer können dabei in einer Verarbeitungsvorrichtung, z.B. einem Mikrocontroller und/oder einer integrierten Schaltung und/oder einer Elektronik des Hausgeräts bzw. der Küchenmaschine, integriert sein.

Ein weiterer Vorteil kann im Rahmen der Erfindung erzielt werden, wenn während der Stabilisierungsphase zur Temperaturüberwachung wenigstens ein Temperaturwert durch wenigstens eine Messung der Temperatur ermittelt wird, wobei der nachfolgende Schritt nach Schritt d) vorgesehen ist:

- Durchführen eines Wechsels von der Stabilisierungsphase in die Temperaturhaltungsphase, wenn während der Stabilisierungsphase eine Bewertung des Temperaturwertes anhand der Stabilisierungstemperatur ein Abbruchkriterium erfüllt, insbesondere wenn durch den Temperaturwert indiziert wird, dass die Temperatur die Stabilisierungstemperatur erreicht hat.

In anderen Worten kann es vorgesehen sein, dass entweder eine Stabilisierungszeitvorgabe als maximale Zeitdauer, insbesondere Stabilisierungszeit, der Durchführung der Stabilisierungsphase erreicht wird oder die gemessene Temperatur die Stabilisierungstemperatur erreicht, damit die Stabilisierungsphase abgebrochen wird und ein Wechsel in die Temperaturhaltungsphase erfolgt.

Vorteilhafterweise kann bei der Erfindung vorgesehen sein, dass während der Aufheizphase zur Temperaturüberwachung mehrere Temperaturwerte durch Messungen der Temperatur ermittelt werden, sodass ein Temperaturanstieg (d. h. insbesondere eine langfristige Steigung einer Temperaturkurve, welche aus den Temperaturwerten bestimmt wird) ermittelt wird, wobei zur Bestimmung der Stabilisierungszeitvorgabe ein Verhältnis des gemäß Schritt c) bestimmten Auswertungsergebnisses mit dem ermittelten Temperaturanstieg bestimmt wird, wobei vorzugsweise die Stabilisierungszeitvorgabe durch eine Maximaldauer begrenzt ist, welche bevorzugt im Bereich von 100 s bis 1000 s, vorzugsweise 200 s bis 800 s, liegt. Damit kann die Stabilität des erfindungsgemäßen Verfahrens erhöht werden.

Ferner kann es im Rahmen der Erfindung vorgesehen sein, dass während der Stabilisierungsphase zur Temperaturüberwachung wenigstens ein Temperaturwert durch wenigstens eine Messung der Temperatur ermittelt wird, wobei der nachfolgende Schritt nach Schritt d) vorgesehen ist:

- Durchführen eines Wechsels von der Stabilisierungsphase in die Aufheizphase, wenn während der Stabilisierungsphase eine Bewertung des Temperaturwertes ein Aufheizkriterium erfüllt, insbesondere wenn eine Temperaturdifferenz zwischen dem Temperaturwert und der Soll-Temperatur einen vorgegebenen Schwellenwert (z. B. Threshold_aufh) überschreitet.

Dabei kann der Temperaturwert zur Bildung der Temperaturdifferenz auch der minimale Temperaturwert aus einer Reihe verschiedener Temperaturwerte sein. Hierdurch kann die Erhitzung des Mediums weiter verbessert werden.

Des Weiteren kann vorgesehen sein, dass während der Aufheizphase und/oder während der Temperaturhaltungsphase und/oder während der Stabilisierungsphase eine Temperaturüberwachung dadurch durchgeführt wird, dass mehrere Messungen der Temperatur zeitlich nacheinander, vorzugsweise in regelmäßigen Abständen, durch den Temperatursensor durchgeführt werden, um jeweils wenigstens einen Temperaturwert zu ermitteln, um insbesondere anhand des Temperaturwertes die Auswertung gemäß Schritt c) durchzuführen und/oder um festzustellen, wenn die Temperatur die Soll-Temperatur und/oder die Stabilisierungstemperatur erreicht hat. Wie zuvor beschrieben, kann vorteilhafterweise auch ein Minimum aus mehreren Temperaturwerten gebildet werden, sodass der geringste (minimale) Temperaturwert für die Bildung einer Differenz genutzt wird.

Ferner ist es optional vorgesehen, dass die Aufheizphase und/oder die Temperaturhaltungsphase und/oder die Stabilisierungsphase während einer Zubereitung eines Lebensmittels durchgeführt wird, um das Lebensmittel im Aufnahmeraum, insbesondere im Rührgefäß, auf die Soll-Temperatur zu erhitzen, wobei die gemessene Temperatur für die Temperatur des Lebensmittels spezifisch ist und von dieser abweicht, wobei vorzugsweise die Stabilisierungstemperatur und/oder Stabilisierungszeitdauer (also eine zeitliche Dauer, mit welcher die Stabilisierungsphase durchgeführt wird) derart bestimmt wird, dass in der Stabilisierungsphase eine Angleichung der Temperatur des Lebensmittels an die Soll-Temperatur mit höherer Geschwindigkeit als in der Temperaturhaltungsphase erfolgt. Hierzu wird die Stabilisierungstemperatur vorteilhafterweise größer gewählt als die vorgegebene Soll-Temperatur. Bspw. wird die Stabilisierungstemperatur mindestens 1 K, oder mindestens 2 K, oder mindestens 5 K, oder mindestens 10 K, oder maximal 20 K größer gewählt als die vorgegebene Soll-Temperatur. Dies ermöglicht eine effektive Erhitzung des Mediums.

Ferner kann im Rahmen der Erfindung vorgesehen sein, dass das Stabilisierungskriterium, insbesondere während Schritt b) und/oder während der Temperaturhaltungsphase, dann erfüllt ist, wenn das Auswertungsergebnis, vorzugsweise eine Differenz eines ermittelten Temperaturwertes oder einer der ermittelten Temperaturwerte, insbesondere eines Minimums der Temperaturwerte, und der Soll-Temperatur, einen vordefinierten Schwellenwert (z. B.

Threshold_stb) überschreitet, wobei vorzugsweise der Schwellenwert lebensmittelunabhängig festgelegt wird, und bevorzugt der Schwellenwert im Bereich von 1 K bis 10 K, vorzugsweise 2 K bis 9 K, bevorzugt 3 K bis 8 K, besonders bevorzugt 3,8 K bis 7 K, vorzugsweise bei genau 3,8 K liegt. Dabei kann durch die Nutzung eines lebensmittelunabhängigen Schwellenwertes der Vorteil erzielt werden, dass das erfindungsgemäße Verfahren für unterschiedliche Lebensmittel in gleicher Weise und damit einfach und kostengünstig durchgeführt werden kann.

Vorteilhafterweise kann das Stabilisierungskriterium (insbesondere nur) dann erfüllt sein, wenn das Auswertungsergebnis einen vordefinierten Schwellenwert (z. B. Threshold_stb) überschreitet. Das Auswertungsergebnis wird z. B. dadurch gebildet, dass eine Differenz oder ein Betrag einer Differenz zwischen einem ermittelten Temperaturwert oder einer der ermittelten Temperaturwerte, insbesondere eines Minimums der Temperaturwerte, und der Soll-Temperatur gebildet wird. In anderen Worten kann das Stabilisierungskriterium dann erfüllt sein, wenn ein Abstand zwischen der Ist-Temperatur und der Soll-Temperatur zu groß wird.

Optional kann es vorgesehen sein, dass die Stabilisierungstemperatur um einen Offset größer ist als die Soll-Temperatur, wobei der Offset durch die Differenz zwischen der Soll-Temperatur und wenigstens eines in der Temperaturhaltungsphase ermittelten Temperaturwertes, insbesondere eines Minimums dieser Temperaturwerte, bestimmt wird, und insbesondere maximal einem Maximaloffset im Bereich von 8 K bis 20 K, vorzugsweise 10 K bis 15 K, bevorzugt 12 K bis 14 K, insbesondere mindestens 5 K, besonders bevorzugt maximal 20 K entsprechen kann. Somit ist eine besonders effektive Aufheizung des Mediums möglich.

Ebenfalls Gegenstand der Erfindung ist ein System zur Anpassung einer Heizleistung bei einem Hausgerät, insbesondere bei einer Küchenmaschine, aufweisend:

- wenigstens einen Temperatursensor zur Durchführung wenigstens einer Messung einer Temperatur bei einem Aufnahmeraum des Hausgeräts, insbesondere bei einem Rührgefäß der Küchenmaschine,
- wenigstens eine Ansteuerungsvorrichtung zur Ansteuerung wenigstens eines Heizelements des Hausgeräts, insbesondere der Küchenmaschine, in Abhängigkeit von einer Heizleistungsanpassung, sodass in einer Aufheizphase die Temperatur eine vorgegebene Soll-Temperatur anstrebt, und in einer Temperaturhaltungsphase eine Heizleistungsbegrenzung erfolgt,
- wenigstens eine Verarbeitungsvorrichtung zur Auswertung der Temperatur anhand der Soll-Temperatur zumindest in der Temperaturhaltungsphase, wobei vorzugsweise die Verarbeitungsvorrichtung dazu ausgeführt ist, eine Stabilisierungsphase in Abhängigkeit von der Auswertung zu initiieren, wobei in der Stabilisierungsphase die Heizleistungsanpassung derart durchführbar ist, dass die Temperatur eine bestimmte Stabilisierungstemperatur anstrebt, wobei die Stabilisierungstemperatur größer ist als die (vorgegebene) Soll-Temperatur.

Damit bringt das erfindungsgemäße System die gleichen Vorteile mit sich, wie sie ausführlich mit Bezug auf ein erfindungsgemäßes Verfahren beschrieben worden sind. Zudem kann ein erfindungsgemäßes System dazu ausgeführt sein, durch ein erfindungsgemäßes Verfahren betreibbar zu sein.

Es ist ferner denkbar, dass das Heizelement bei dem Aufnahmeraum, insbesondere in einer Wandung des Aufnahmeraums, vorzugsweise im Rührgefäß, integriert ist, insbesondere als eine Widerstandsheizung in einem Boden des Aufnahmeraums, vorzugsweise im Boden des Rührgefäßes. Bevorzugt kann dabei das Heizelement flächig im Boden bzw. Rührgefäßboden integriert sein, sodass eine möglichst große Fläche zum Aufheizen des Mediums (insbesondere im Rührgefäß) genutzt werden kann. Insbesondere durch einen elektrischen Stromfluss im Heizelement kann dabei das Heizelement durch die Heizregelung erhitzt werden.

Des Weiteren ist es denkbar, dass der Temperatursensor als ein NTC-Sensor ausgeführt ist, und bei dem Aufnahmeraum, insbesondere in einer Wandung des Aufnahmeraums, insbesondere in einem Rührgefäß, integriert ist. Somit kann es möglich sein, dass der Temperatursensor nicht in direkten Kontakt mit dem Medium (insbesondere im Rührgefäß) kommt. Hierdurch wird die Lebensdauer des Temperatursensors und die Sicherheit beim Betrieb des Hausgeräts insbesondere der Küchenmaschine verbessert.

Ebenfalls unter Schutz gestellt ist ein Hausgerät, insbesondere eine Küchenmaschine, vorzugsweise zur (ggf. zumindest teilweise automatischen) Zubereitung wenigstens eines Lebensmittels, wobei ein erfindungsgemäßes System bei dem Hausgerät bzw. der Küchenmaschine vorgesehen ist. Damit bringt das erfindungsgemäße Hausgerät die gleichen Vorteile mit sich, wie sie ausführlich mit Bezug auf das erfindungsgemäße System beschrieben worden sind.

Ebenfalls Gegenstand der Erfindung ist ein Computerprogrammprodukt zur Anpassung einer Heizleistung bei einem Hausgerät, insbesondere bei einer Küchenmaschine. Hierbei ist vorgesehen, dass das Computerprogrammprodukt dazu ausgebildet ist, bei Ausführung durch eine Verarbeitungsvorrichtung die nachfolgenden Schritte durchzuführen, insbesondere gemäß einem erfindungsgemäßen Verfahren:

a) Initiieren einer Aufheizphase mit einer derartigen Heizleistungsanpassung, dass eine (gemessene) Temperatur bei einem Aufnahmeraum des Hausgeräts, insbesondere einem Rührgefäß der Küchenmaschine, eine vorgegebene Soll-Temperatur anstrebt,

b) Initiieren einer Temperaturhaltungsphase, wenn die Temperatur die Soll-Temperatur erreicht hat, wobei in der Temperaturhaltungsphase eine Heizleistungsbegrenzung erfolgt,

c) Durchführen wenigstens einer Auswertung der Temperatur anhand der Soll-Temperatur während der Temperaturhaltungsphase, sodass ein Auswertungsergebnis bestimmt wird,

d) Initiieren einer Stabilisierungsphase, wenn das Auswertungsergebnis ein Stabilisierungskriterium erfüllt, wobei in der Stabilisierungsphase die Heizleistungsanpassung derart erfolgt, dass die Temperatur eine bestimmte Stabilisierungstemperatur anstrebt, wobei die Stabilisierungstemperatur größer ist als die Soll-Temperatur.

Damit bringt das erfindungsgemäße Computerprogrammprodukt die gleichen Vorteile mit sich, wie sie ausführlich mit Bezug auf ein erfindungsgemäßes Verfahren beschrieben worden sind.

Fig. 1    eine schematische Darstellung eines Hausgeräts,
Fig. 2    ein schematisches Blockdiagramm zur Visualisierung eines erfindungsgemäßen Verfahrens,
Fig. 3    eine schematische Messkurve zur Visualisierung eines erfindungsgemäßen Verfahrens.

In den nachfolgenden Figuren werden für die gleichen technischen Merkmale auch von unterschiedlichen Ausführungsbeispielen die identischen Bezugszeichen verwendet.

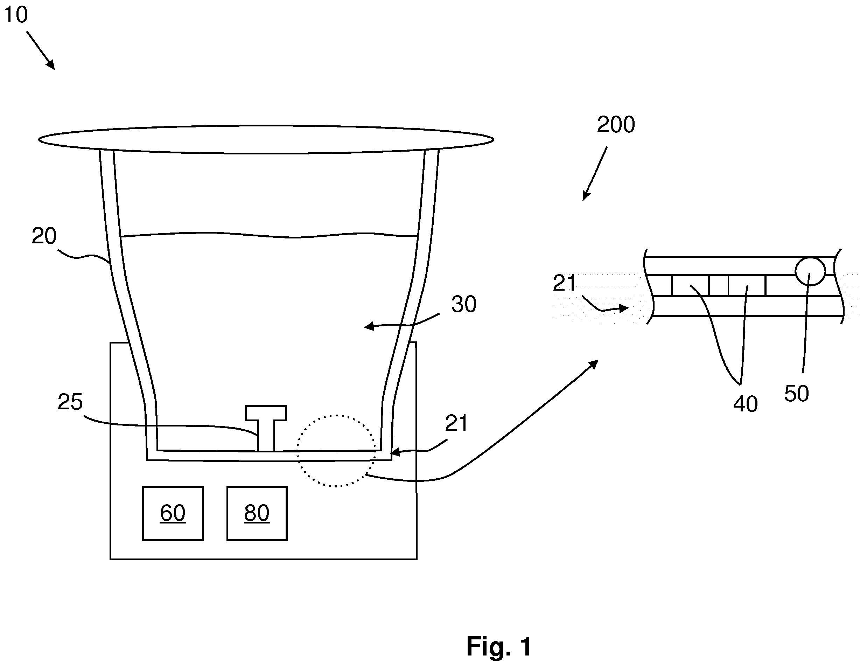

Figur 1 zeigt schematisch ein erfindungsgemäßes Hausgerät 10 am Beispiel einer Küchenmaschine 10 mit einem erfindungsgemäßen System 200. Es ist zu sehen, dass ein Rührgefäß 20 als Aufnahmeraum 20 zur Zubereitung von Lebensmitteln vorgesehen ist.

Hierzu kann wenigstens ein Lebensmittel in das Rührgefäß 20 aufgenommen werden. Es ist das daraufhin im Rührgefäß 20 vorhandene Medium 30 schematisch mit einem beispielhaften Füllstand dargestellt. Wenigstens ein Heizelement 40 kann bei der Küchenmaschine 10 zur Erhitzung des Mediums 30 vorgesehen sein und durch eine Heizregelung in Abhängigkeit von einer gemessenen Temperatur T betrieben werden. Für die Heizregelung kann z. B. eine Ansteuerungsvorrichtung 80 genutzt werden, welche eine elektrische Energieübertragung an das Heizelement 40 zur Erhitzung in Abhängigkeit von Temperaturmesswerten steuert. Zur verbesserten Visualisierung des Heizelements 40 ist ein durch eine gestrichelte Linie hervorgehobener Bereich eines Rührgefäßbodens 21 vergrößert dargestellt. Das Heizelement 40 kann flächig im Rührgefäßboden 21 integriert sein, um eine gleichmäßige Erhitzung des Mediums 30 zu ermöglichen. Auch kann benachbart zum Heizelement 40 im Rührgefäßboden 21 ein Temperatursensor 50 zur Messung der Ist-Temperatur T und somit zur Erfassung der Temperaturmesswerte integriert sein.

Bei der Heizregelung kann es (z. B. in Abhängigkeit vom Medium 30 und/oder Füllstand des Mediums 30 und/oder der gewünschten oder eingestellten Temperatur) zu einer Abweichung zwischen der gemessenen Ist-Temperatur T und einer tatsächlichen Temperatur des Mediums 30 kommen, bspw. in Bezug auf eine Stelle im Medium 30 weiter entfernt vom Heizelement 40. Denn die Erhitzung durch das Heizelement 40 wirkt sich zunächst auf den Bereich des Mediums 30 unmittelbar benachbart zum Heizelement 40 aus, und es kommt anschließend zu einer mehr oder weniger langsamen Wärmeübertragung zu weiter entfernten Bereichen des Mediums 30. Fördernd wirkt sich für die Wärmeübertragung wiederrum ein Betrieb eines Rührwerks 25 im Rührgefäß 20 aus, durch welches ein Verrühren des Mediums 30 zur Zubereitung des darin befindlichen Lebensmittels möglich ist.

Um die gleichmäßige und schnelle Erhitzung des gesamten Mediums 30 weiter zu begünstigen, kann ein erfindungsgemäßes Verfahren 100 zumindest teilweise durch eine Auswertung einer Verarbeitungsvorrichtung 60 bereitgestellt werden, wie nachfolgend näher beschrieben wird.

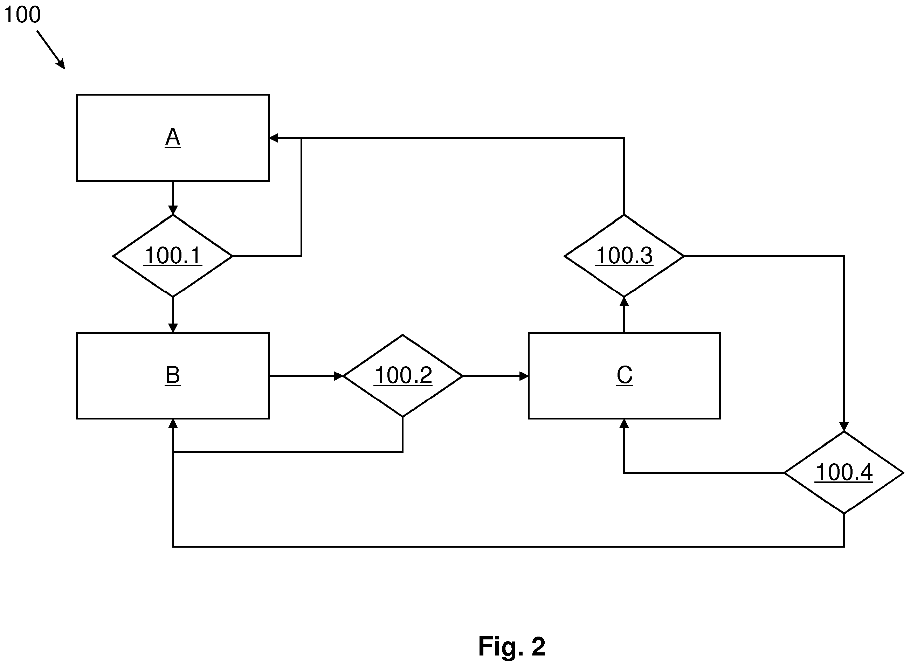

Figur 2 zeigt schematisch einen Ablauf eines erfindungsgemäßen Verfahrens 100. Bspw. wird das Verfahren 100 initiiert, wenn ein Benutzer des Hausgeräts 10 bzw. der Küchenmaschine 10 eine Erhitzung des Lebensmittels wünscht und entsprechend eine Soll-Temperatur S für das Medium 30 einstellt. Hierbei wird zunächst eine Aufheizphase A mit einer derartigen Heizleistungsanpassung des Heizelements 40 durchgeführt, dass die durch den Temperatursensor 50 gemessene Temperatur T (Ist-Temperatur T) die vorgegebene Soll-Temperatur S anstrebt. Die Heizleistungsanpassung wird z. B. durch eine elektrische Energieübertragung an das Heizelement 40 bereitgestellt, bspw. durch eine Ansteuerungsvorrichtung 80, wobei die hierbei an das Heizelement 40 übertragene elektrische Leistung in Abhängigkeit von der Temperatur T angepasst wird. Sollte sich zu diesem Zeitpunkt ein Medium 30 im Aufnahmeraum 20, insbesondere im Rührgefäß 20, befinden, welches über den Boden 21 insbesondere Rührgefäßboden 21 in indirektem Kontakt mit dem Heizelement 40 steht, kann es zur Wärmeübertragung vom Heizelement 40 an das Medium 30 kommen. Der Boden 21 kann hierzu zumindest teilweise aus einem wärmeleitenden Material, wie bspw. einem Metall, ausgebildet sein. Es ist klar, dass es zu einer Abweichung zwischen der tatsächlichen Temperatur des Mediums 30 und der gemessenen Ist-Temperatur T kommt, da die Erhitzung des Mediums 30 üblicherweise Zeit benötigt. Daher werden weitere Schritte durchgeführt, um diese Zeitdauer möglichst zu reduzieren, und somit eine verbesserte Zubereitung des Lebensmittels im Medium zu ermöglichen.

Im nachfolgenden Schritt 100.1 kann daher geprüft werden, ob die gemessene Ist-Temperatur T die Soll-Temperatur S erreicht hat. Wenn dies nicht der Fall ist, wird weiterhin die Aufheizphase A durchgeführt. Wenn dies der Fall ist, wird eine Temperaturhaltungsphase B durchgeführt, wobei in der Temperaturhaltungsphase B eine Heizleistungsbegrenzung erfolgt. In anderen Worten erfolgt hier eine Heizung mit begrenzter Leistung (bspw. maximal bis zur Maximalhalteheizleistung), sodass ein Zeitraum zur Homogenisierung der Temperatur im Medium bereitgestellt wird. Die Maximalhalteheizleistung kann dabei in Abhängigkeit von einer Maximalheizleistung festgelegt werden.

Während der Temperaturhaltungsphase B kann weiterhin eine Messung der Temperatur T erfolgen. Auch kann von mehreren gemessenen Temperaturmesswerten ein Minimum gebildet werden (also der kleinste Temperaturmesswert ermittelt werden).

Im weiteren Schritt 100.2 wird vorzugsweise geprüft, ob eine Differenz des Minimums (also der kleinsten gemessenen Temperatur T) und der Soll-Temperatur S noch unterhalb eines Schwellenwertes liegt. Anders ausgedrückt wird die nachfolgende Prüfung durchgeführt:

$$\min(Tbowl) - Ttarget < Threshold\_stb.$$

Hierbei ist Tbowl die gemessene Temperatur T, min das Minimum, Ttarget die vorgegebene Soll-Temperatur S und Threshold_stb der vordefinierte Schwellenwert. Es wird auf diese Weise eine Auswertung der Temperatur T anhand der Soll-Temperatur S während der Temperaturhaltungsphase B durchgeführt, sodass ein Auswertungsergebnis bestimmt wird. Sollte das Ergebnis dieser Prüfung (also der Vergleich) positiv sein (die Differenz oder der Betrag der Differenz also unterhalb des Schwellenwertes liegen), also das Auswertungsergebnis kein Stabilisierungskriterium erfüllen, wird weiterhin die Temperaturhaltungsphase B durchgeführt. Andernfalls liegt das Stabilisierungskriterium vor, und es wird eine Stabilisierungsphase C durchgeführt.

In der Stabilisierungsphase C erfolgt die Heizleistungsanpassung insbesondere derart, dass die Temperatur T eine bestimmte Stabilisierungstemperatur ST anstrebt, wobei die Stabilisierungstemperatur ST größer ist als die Soll-Temperatur S. In anderen Worten wird eine beabsichtigte Übersteuerung der Soll-Temperatur S in der Stabilisierungsphase C durchgeführt, um eine verbesserte Erhitzung des Mediums zu ermöglichen.

In einem weiteren Schritt 100.3 kann dann optional geprüft werden, ob ein Minimum der gemessenen Temperatur T subtrahiert mit der Soll-Temperatur S oberhalb eines weiteren Schwellenwertes liegt. In anderen Worten wird die nachfolgende Prüfung durchgeführt:

$$\min(Tbowl) - Ttarget > Threshold\_aufh,$$

mit Threshold_aufh als der weitere Schwellenwert, welcher ggf. von der Stabilisierungstemperatur ST abhängig ist. Falls diese Prüfung positiv ist, also der Schwellenwert überschritten wird, wechselt die Heizleistungsanpassung zur Aufheizphase A. Andernfalls (oder alternativ) kann eine weitere Prüfung gemäß Schritt 100.4 durchgeführt werden:

$$Tbowl > Ttarget, new \ OR \ TIMER > Time\_check,$$

TIMER ist hierbei die Ausgabe eines Zeitgebers, und indiziert die Zeitdauer der Durchführung der Stabilisierungsphase C. Time_check ist ein zeitlicher Schwellenwert. Wenn also die Zeitdauer der Stabilisierungsphase C einen maximalen Wert übersteigt, oder die gemessene Temperatur T eine "neue" Soll-Temperatur Ttarget, new übersteigt, ist das Ergebnis dieser Prüfung positiv. In diesem Fall wird erneut zur Temperaturhaltungsphase B gewechselt. Andernfalls wird weiterhin die Stabilisierungsphase C durchgeführt. Die neue Soll-Temperatur Ttarget, new ist hierbei insbesondere die Stabilisierungstemperatur ST.

Die Werte Time_check und Ttarget, new werden ggf. in der Stabilisierungsphase C berechnet. Time_check kann bspw. berechnet werden durch:

$$Time\_check = (Ttarget - \min(Tbowl))/ dTbowl, longterm,$$

wobei dTbowl, longterm ein langfristiges Steigungsmaß (langfristige Steigung) für die gemessene Temperatur T ist. Dieses kann bspw. anhand eines Verlaufs von gemessenen Temperaturmesswerten der gemesseneren Temperatur T ermittelt werden, z. B. durch eine Differenzbildung der Messwerte und/oder durch eine Interpolation oder dergleichen.

Anschließend kann Time_check ggf. noch mit einem vorgegebenen Maximalwert für Time_check verglichen werden, und bei einem Überschreiten für Time_check der Maximalwert festgelegt werden.

Des Weiteren kann vorgesehen sein, dass die Stabilisierungstemperatur ST um einen Offset größer ist als die Soll-Temperatur S, wobei der Offset durch die Differenz zwischen der Soll-Temperatur S und wenigstens eines in der Temperaturhaltungsphase B ermittelten Temperaturwertes, insbesondere eines Minimums dieser Temperaturwerte, bestimmt wird. Zur Bestimmung der Stabilisierungstemperatur ST kann bspw. zunächst der Wert "Time_check", also die vorgegebene Maximaldauer der Stabilisierungsphase C, mit dTbowl, longterm multipliziert werden. Anschließend kann dieser Wert mit der vorgegebenen Soll-Temperatur S (bzw. Ttarget) addiert werden. Diese Summe kann ggf. auf einen maximalen Wert begrenzt werden und bildet dann die Stabilisierungstemperatur ST (Ttarget,new).

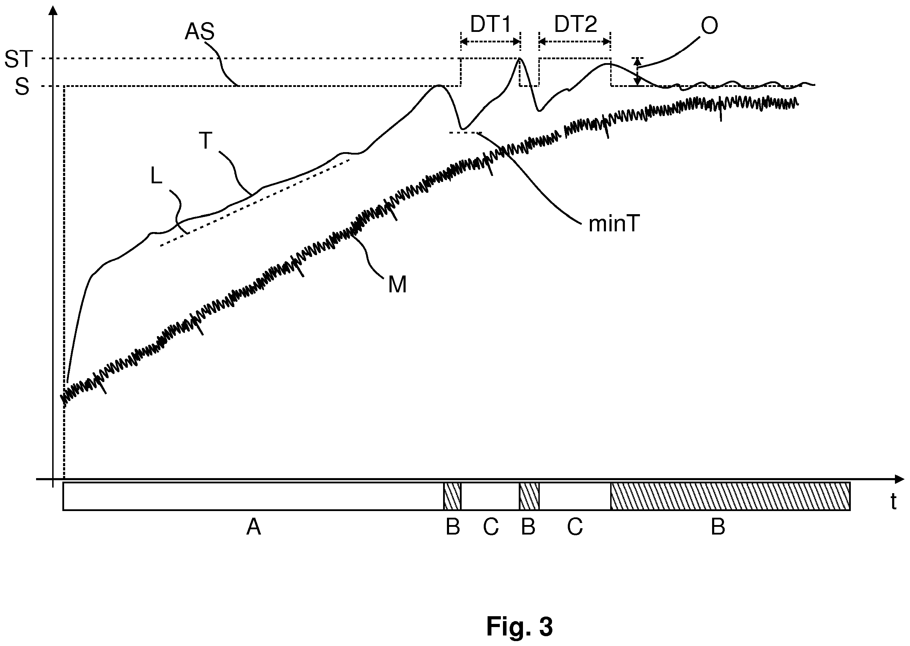

In Figur 3 ist schematisch ein Ablauf eines erfindungsgemäßen Verfahrens 100 anhand von beispielhaften Messwerten über die Zeit t visualisiert. Es ist eine Kurve aus Messwerten für eine durch den Temperatursensor 50 gemessene Temperatur T gezeigt und einem Verlauf einer (unter praktischen Bedingungen ggf. nicht direkt messbaren) tatsächlichen Temperatur eines Mediums 30 (Medium-Temperatur M) gegenübergestellt. Zur Erfassung der Medium-Temperatur M kann bspw. ein externer Sensor eingesetzt werden. Aus den Messwerten für die gemessene Temperatur T kann z. B. eine langfristige Steigung L berechnet werden, was dann dem Wert dTbowl, longterm entsprechen kann. Die langfristige Steigung L ist bspw. die Steigung der gezeigten Kurve der gemessenen Temperatur T über einen Zeitraum von 0,5 s bis 200 s, vorzugsweise 1 s bis 100 s, bevorzugt 60 s. Die Kurve umfasst dabei bspw. mehrere Messwerte der Temperatur T.

Zunächst wird eine Aufheizphase A zur Erhitzung des Mediums 30 durchgeführt. In dieser kann eine vorgegebene Soll-Temperatur S zur Heizregelung genutzt werden, wobei vorzugsweise die hierzu verwendete Regelgröße die durch den Temperatursensor 50 gemessene Temperatur T ist, und damit ein Temperaturwert für die Temperatur T den IstWert bildet, welcher mit der Soll-Temperatur S als aktuelle Soll-Temperatur AS verglichen werden kann. Zunächst strebt also in der Aufheizphase A die Temperatur T die Soll-Temperatur S an. Wenn die Soll-Temperatur S durch die Temperatur T erreicht ist, kann die Medium-Temperatur M dennoch unterhalb der Soll-Temperatur S liegen, wie anhand Figur 3 erkennbar ist. Um diese Differenz möglichst zügig zu reduzieren, können weitere Phasen durchgeführt werden. Zunächst kann dies die Temperaturhaltungsphase B sein, bei welcher eine Heizleistungsbegrenzung erfolgt. Es kann ein Minimum des Temperaturwerts minT in dieser Phase ermittelt werden, z. B. ein Minimum sämtlicher in dieser Phase gemessenen Temperaturwerte, um durch einen Vergleich mit einem Schwellenwert ein Auswertungsergebnis zu bestimmen. In Abhängigkeit von dem Auswertungsergebnis kann sodann eine Stabilisierungsphase C durchgeführt werden, wenn das Auswertungsergebnis ein Stabilisierungskriterium erfüllt, wobei in der Stabilisierungsphase C die Heizleistungsanpassung derart erfolgt, dass die Temperatur T eine bestimmte Stabilisierungstemperatur ST anstrebt, wobei die Stabilisierungstemperatur ST größer ist als die Soll-Temperatur S.

Entsprechend kann die zur Heizregelung genutzte aktuelle Soll-Temperatur AS zunächst in der Aufheizphase A der vorgegebenen Soll-Temperatur S und in der Stabilisierungsphase C der Stabilisierungstemperatur ST entsprechen. Zur Bildung der Stabilisierungstemperatur ST kann ggf. die vorgegebene Soll-Temperatur S durch einen Offset O erhöht werden. Weiter ist dargestellt, dass die Stabilisierungsphasen C auch eine unterschiedliche zeitliche Dauer (Stabilisierungsdauer oder Stabilisierungszeitdauer) DT1 und DT2 aufweisen können. So wird eine erste Stabilisierungsphase C beendet, weil die Stabilisierungstemperatur ST erreicht wird, und die zweite Stabilisierungsphase C beendet, weil die Dauer DT2 eine Maximaldauer überschreitet.

Die voranstehende Erläuterung der Ausführungsformen beschreibt die vorliegende Erfindung ausschließlich im Rahmen von Beispielen.

## Bezugszeichenliste

| 10 | Küchenmaschine |
| 20 | Aufnahmeraum, Rührgefäß |
| 21 | Boden, Rührgefäßboden |
| 25 | Rührwerk |
| 30 | Medium |
| 40 | Heizelement |
| 50 | Temperatursensor |
| 60 | Verarbeitungsvorrichtung |
| 80 | Ansteuerungsvorrichtung |
| 100 | Verfahren |
| 200 | System |
| minT | Minimum Temperaturwert |
| A | Aufheizphase |
| AS | aktuelle Soll-Temperatur |
| B | Temperaturhaltungsphase |
| C | Stabilisierungsphase |

L      Langfristige Steigung
M     Medium-Temperatur
O     Offset
S     vorgegebene Soll-Temperatur
ST    Stabilisierungstemperatur
T     Temperatur, Ist-Temperatur
DT1   erste Stabilisierungszeitdauer
DT2   zweite Stabilisierungszeitdauer

**Patentansprüche**

1. Verfahren (100) zur Anpassung einer Heizleistung wenigstens eines Heizelementes (40) eines Hausgeräts (10), insbesondere einer Küchenmaschine (10) zur zumindest teilweise automatischen Zubereitung von Lebensmitteln, wobei das Hausgerät (10) einen Temperatursensor (50) zur Messung einer Temperatur (T) bei einem Aufnahmeraum (20) des Hausgeräts (10) umfasst,
**wobei die nachfolgenden Schritte vorgesehen sind:**

   a) Durchführen einer Aufheizphase (A) mit einer derartigen Heizleistungsanpassung, dass die Temperatur (T) eine vorgegebene Soll-Temperatur (S) anstrebt,
   b) Durchführen einer Temperaturhaltungsphase (B), wenn die Temperatur (T) die Soll-Temperatur (S) erreicht hat, wobei in der Temperaturhaltungsphase (B) eine Heizleistungsbegrenzung erfolgt,
   c) Durchführen wenigstens einer Auswertung der Temperatur (T) anhand der Soll-Temperatur (S) während der Temperaturhaltungsphase (B), sodass ein Auswertungsergebnis bestimmt wird,
   d) Durchführen einer Stabilisierungsphase (C), wenn das Auswertungsergebnis ein Stabilisierungskriterium erfüllt, wobei in der Stabilisierungsphase (C) die Heizleistungsanpassung derart erfolgt, dass die Temperatur (T) eine bestimmte Stabilisierungstemperatur (ST) anstrebt, wobei die Stabilisierungstemperatur (ST) größer ist als die Soll-Temperatur (S).

2. Verfahren (100) nach Anspruch 1,
**dadurch gekennzeichnet,**
**dass** die Stabilisierungstemperatur (ST) anhand des Auswertungsergebnisses bestimmt wird, wobei vorzugsweise die Stabilisierungstemperatur (ST) durch einen Maximaloffset begrenzt wird.

3. Verfahren (100) nach Anspruch 1 oder 2,
**dadurch gekennzeichnet,**
**dass** zur Heizleistungsbegrenzung die Heizleistungsanpassung derart erfolgt, dass die Heizleistung auf eine vorgegebene Maximalhalteheizleistung begrenzt ist, wobei bei der Aufheizphase (A) und/oder der Stabilisierungsphase (C) die Heizleistungsanpassung, insbesondere als eine Heizleistungsregelung, derart erfolgt, dass die Heizleistungsbegrenzung aufgehoben ist, oder bei der Stabilisierungsphase (C) die Heizleistungsanpassung derart erfolgt, dass die Heizleistungsbegrenzung auf einen höheren Wert als bei der Temperaturhaltungsphase (B) begrenzt ist.

4. Verfahren (100) nach einem der vorhergehenden Ansprüche,
**dadurch gekennzeichnet,**
**dass** bei der Heizleistungsbegrenzung für die Temperaturhaltungsphase (B) die Heizleistung auf eine vorgegebene Maximalhalteheizleistung im Bereich von 10 % bis 90 %, vorzugsweise 20 % bis 70 %, bevorzugt 30 % bis 60 %, besonders bevorzugt 40 % bis 50%, insbesondere 40%, einer Maximalheizleistung begrenzt ist und/oder dass bei der Temperaturhaltungsphase (B) zur Temperaturüberwachung ein oder mehrere Temperaturwerte durch wenigstens eine Messung der Temperatur (T) ermittelt werden, wobei bei Schritt c) die Auswertung dadurch erfolgt, dass eine Differenz des ermittelten Temperaturwertes oder einer der ermittelten Temperaturwerte, insbesondere eines Minimums der Temperaturwerte, und der Soll-Temperatur (S) bestimmt wird, wobei vorzugsweise die Differenz das Auswertungsergebnis bildet.

5. Verfahren (100) nach einem der vorhergehenden Ansprüche,
**dadurch gekennzeichnet,**
**dass** während der Stabilisierungsphase (C) eine zeitliche Stabilisierungsdauer der Durchführung der Stabilisierungsphase (C) ermittelt wird, wobei der nachfolgende Schritt nach Schritt d) vorgesehen ist:

- Durchführen eines Wechsels von der Stabilisierungsphase (C) in die Temperaturhaltungsphase (B), wenn die ermittelte zeitliche Stabilisierungsdauer eine bestimmte Stabilisierungszeitvorgabe übersteigt.

6. Verfahren (100) nach einem der vorhergehenden Ansprüche,
**dadurch gekennzeichnet,**
**dass** während der Stabilisierungsphase (C) zur Temperaturüberwachung wenigstens ein Temperaturwert durch wenigstens eine Messung der Temperatur (T) ermittelt wird, wobei der nachfolgende Schritt nach Schritt d) vorgesehen ist:

- Durchführen eines Wechsels von der Stabilisierungsphase (C) in die Temperaturhaltungsphase (B), wenn während der Stabilisierungsphase (C) eine Bewertung des Temperaturwertes anhand der Stabilisierungstemperatur (ST) ein Abbruchkriterium erfüllt, insbesondere wenn durch den Temperaturwert indiziert wird, dass die Temperatur (T) die Stabilisierungstemperatur (ST) erreicht hat.

7. Verfahren (100) nach einem der vorhergehenden Ansprüche,
**dadurch gekennzeichnet,**
**dass** während der Aufheizphase (A) zur Temperaturüberwachung mehrere Temperaturwerte durch Messungen der Temperatur (T) ermittelt werden, sodass ein Temperaturanstieg ermittelt wird, wobei zur Bestimmung der Stabilisierungszeitvorgabe ein Verhältnis des gemäß Schritt c) bestimmten Auswertungsergebnisses mit dem ermittelten Temperaturanstieg bestimmt wird, wobei vorzugsweise die Stabilisierungszeitvorgabe durch eine Maximaldauer begrenzt ist, welche bevorzugt im Bereich von 100 s bis 1000 s, vorzugsweise 200 s bis 800 s, liegt.

8. Verfahren (100) nach einem der vorhergehenden Ansprüche,
**dadurch gekennzeichnet,**
**dass** während der Stabilisierungsphase (C) zur Temperaturüberwachung wenigstens ein Temperaturwert durch wenigstens eine Messung der Temperatur (T) ermittelt wird, wobei der nachfolgende Schritt nach Schritt d) vorgesehen ist:

- Durchführen eines Wechsels von der Stabilisierungsphase (C) in die Aufheizphase (A), wenn während der Stabilisierungsphase (C) eine Bewertung des Temperaturwertes ein Aufheizkriterium erfüllt, insbesondere wenn eine Temperaturdifferenz zwischen dem Temperaturwert und der Soll-Temperatur (S) einen vorgegebenen Schwellenwert überschreitet.

9. Verfahren (100) nach einem der vorhergehenden Ansprüche,
**dadurch gekennzeichnet,**
**dass** während der Aufheizphase (A) und/oder während der Temperaturhaltungsphase (B) und/oder während der Stabilisierungsphase (C) eine Temperaturüberwachung dadurch durchgeführt wird, dass mehrere Messungen der Temperatur (T) zeitlich nacheinander, vorzugsweise in regelmäßigen Abständen, durch den Temperatursensor (50) durchgeführt werden, um jeweils wenigstens einen Temperaturwert zu ermitteln, um insbesondere anhand des Temperaturwertes die Auswertung gemäß Schritt c) durchzuführen und/oder um festzustellen, wenn die Temperatur (T) die Soll-Temperatur (S) und/oder die Stabilisierungstemperatur (ST) erreicht hat.

10. Verfahren (100) nach einem der vorhergehenden Ansprüche,
**dadurch gekennzeichnet,**
**dass** die Aufheizphase (A) und/oder die Temperaturhaltungsphase (B) und/oder die Stabilisierungsphase (C) während einer Zubereitung eines Lebensmittels durchgeführt wird, um das Lebensmittel im Aufnahmeraum (20) auf die Soll-Temperatur (S) zu erhitzen, wobei die gemessene Temperatur (T) für die Temperatur des Lebensmittels spezifisch ist und von dieser abweicht, wobei die Stabilisierungstemperatur (ST) und/oder eine Stabilisierungszeitdauer (DT) derart bestimmt wird, dass in der Stabilisierungsphase (C) eine Angleichung der Temperatur des Lebensmittels an die Soll-Temperatur (S) mit höherer Geschwindigkeit als in der Temperaturhaltungsphase (B) erfolgt.

11. Verfahren (100) nach einem der vorhergehenden Ansprüche,
**dadurch gekennzeichnet,**
**dass** das Stabilisierungskriterium dann erfüllt ist, wenn das Auswertungsergebnis, vorzugsweise eine Differenz eines ermittelten Temperaturwertes oder einer der ermittelten Temperaturwerte, insbesondere eines Minimums der Temperaturwerte, und der Soll-Temperatur (S), einen vordefinierten Schwellenwert überschreitet, wobei vorzugsweise der Schwellenwert lebensmittelunabhängig festgelegt wird, und bevorzugt der Schwellenwert im Bereich von 1 K bis 10 K, vorzugsweise 2 K bis 9 K, bevorzugt 3 K bis 8 K, besonders bevorzugt 3,8 K bis 7 K liegt und/oder dass die Stabilisierungstemperatur (ST) um einen Offset größer ist als die Soll-Temperatur (S), wobei der Offset durch die Differenz zwischen der Soll-Temperatur (S) und wenigstens eines in der Temperaturhaltungsphase (B) ermittelten Temperaturwertes, insbesondere eines Minimums dieser Temperaturwerte, bestimmt wird, und insbesondere maximal einem Maximaloffset im Bereich von 8 K bis 20 K, vorzugsweise 10 K bis 15 K, bevorzugt 12 K bis 14 K entsprechen kann.

12. System (200) zur Anpassung einer Heizleistung bei einem Hausgerät (10), insbesondere bei einer Küchenmaschine (10), aufweisend:

- wenigstens einen Temperatursensor (50) zur Durchführung wenigstens einer Messung einer Temperatur (T) bei einem Aufnahmeraum (20) des Hausgeräts (10), insbesondere bei einem Rührgefäß (20) der Küchenmaschine (10),
- wenigstens eine Ansteuerungsvorrichtung (80) zur Ansteuerung wenigstens eines Heizelementes (40) des Hausgeräts (10) in Abhängigkeit von einer Heizleistungsanpassung, sodass in einer Aufheizphase (A) die Temperatur (T) eine vorgegebene Soll-Temperatur (S) anstrebt, und in einer Temperaturhaltungsphase (B) eine Heizleistungsbegrenzung erfolgt,
- wenigstens eine Verarbeitungsvorrichtung (60) zur Auswertung der Temperatur (T) anhand der Soll-Temperatur (S) zumindest in der Temperaturhaltungsphase (B), wobei die Verarbeitungsvorrichtung (60) dazu ausgeführt ist, eine Stabilisierungsphase (C) in Abhängigkeit von der Auswertung zu initiieren, wobei in der Stabilisierungsphase (C) die Heizleistungsanpassung derart durchführbar ist, dass die Temperatur (T) eine bestimmte Stabilisierungstemperatur (ST) anstrebt, wobei die Stabilisierungstemperatur (ST) größer ist als die Soll-Temperatur (S).

13. System (200) nach dem vorhergehenden Anspruch,
**dadurch gekennzeichnet,**
**dass** das Heizelement (40) bei dem Aufnahmeraum (20) integriert ist, insbesondere als eine Widerstandsheizung in einem Boden des Aufnahmeraums (20) und/oder dass der Temperatursensor (50) als ein NTC-Sensor ausgeführt ist, und bei dem Aufnahmeraum (20) integriert ist und/oder dass das System (200) gemäß einem Verfahren (100) nach einem der vorhergehenden Ansprüche betreibbar ist.

14. Hausgerät (10) zur Zubereitung wenigstens eines Lebensmittels,
**dadurch gekennzeichnet,**
**dass** ein System (200) nach einem der Ansprüche 12 oder 13 vorgesehen ist.

15. Computerprogrammprodukt zur Anpassung einer Heizleistung bei einem Hausgerät (10), wobei das Computerprogrammprodukt dazu ausgeführt ist, bei Ausführung durch eine Verarbeitungsvorrichtung (60) die nachfolgenden Schritte durchzuführen,
gemäß einem Verfahren (100) nach einem der Ansprüche 1-11:

a) Initiieren einer Aufheizphase (A) mit einer derartigen Heizleistungsanpassung, dass eine Temperatur (T) bei einem Aufnahmeraum (20) des Hausgeräts (10) eine vorgegebene Soll-Temperatur (S) anstrebt,
b) Initiieren einer Temperaturhaltungsphase (B), wenn die Temperatur (T) die Soll-Temperatur (S) erreicht hat, wobei in der Temperaturhaltungsphase (B) eine Heizleistungsbegrenzung erfolgt,
c) Durchführen wenigstens einer Auswertung der Temperatur (T) anhand der Soll-Temperatur (S) während der Temperaturhaltungsphase (B), sodass ein Auswertungsergebnis bestimmt wird,
d) Initiieren einer Stabilisierungsphase (C), wenn das Auswertungsergebnis ein Stabilisierungskriterium erfüllt, wobei in der Stabilisierungsphase (C) die Heizleistungsanpassung derart erfolgt, dass die Temperatur (T) eine bestimmte Stabilisierungstemperatur (ST) anstrebt, wobei die Stabilisierungstemperatur (ST) größer ist als die Soll-Temperatur (S).

**Claims**

1. Method (100) for adapting a heating power of at least one heating element (40) of a domestic appliance (10), in particular a food processor (10) for at least partially automatic preparation of food, wherein the domestic appliance (10) comprises a temperature sensor (50) for measuring a temperature (T) at a receiving space (20) of the domestic appliance (10),
wherein the following steps are provided:

a) performing a heating phase (A) with such a heating power adjustment that the temperature (T) aims at a predetermined set temperature (S),

b) performing a temperature holding phase (B) when the temperature (T) has reached the set temperature (S), wherein heating power limitation occurs in the temperature holding phase (B),

c) performing at least one evaluation of the temperature (T) based on the set temperature (S) during the temperature holding phase (B) so that an evaluation result is determined,

d) performing a stabilization phase (C) when the evaluation result satisfies a stabilization criterion, wherein in the stabilization phase (C) the heating power adjustment occurs in such a way that the temperature (T) aims at a certain stabilization temperature (ST), wherein the stabilization temperature (ST) is greater than the set temperature (S).

2. Method (100) according to claim 1,
**characterized in that**
the stabilization temperature (ST) is determined on the basis of the evaluation result, wherein preferably the stabilization temperature (ST) is limited by a maximum offset.

3. Method (100) according to claim 1 or 2,
**characterized in that**
the heating power is adjusted for heating power limitation in such a way that the heating power is limited to a predetermined maximum holding heating power, wherein in the heating phase (A) and/or the stabilization phase (C) the heating power adjustment, in particular as a heating power control, occurs in such a way that the heating power limitation is cancelled, or in the stabilization phase (C) the heating power adjustment occurs in such a way that the heating power limitation is limited to a higher value than in the temperature holding phase (B).

4. Method (100) according to any one of the preceding claims,
**characterized in that**
in the case of the heating power limitation for the temperature holding phase (B), the heating power is limited to a predetermined maximum holding heating power in the range from 10% to 90%, preferably 20% to 70%, preferably 30% to 60%, particularly preferably 40% to 50%, in particular 40%, of a maximum heating power and/or in the temperature holding phase (B), one or more temperature values are determined by at least one measurement of the temperature (T) for the purpose of temperature monitoring, wherein in step c) the evaluation is carried out by determining a difference between the determined temperature value or one of the determined temperature values, in particular a minimum of the temperature values, and the set temperature (S), wherein preferably the difference forms the evaluation result.

5. Method (100) according to any one of the preceding claims,
**characterized in that**
during the stabilization phase (C) a temporal stabilization duration of the performance of the stabilization phase (C) is determined, wherein the subsequent step is provided after step d):

- performing a change from the stabilization phase (C) to the temperature holding phase (B) if the determined temporal stabilization duration exceeds a certain stabilization time specification.

6. Method (100) according to any one of the preceding claims,
**characterized in that**
during the stabilization phase (C) for temperature monitoring at least one temperature value is determined by at least one measurement of the temperature (T), wherein the subsequent step is provided after step d):

- performing a change from the stabilization phase (C) to the temperature holding phase (B) if, during the stabilization phase (C), an evaluation of the temperature value on the basis of the stabilization temperature (ST) satisfies a termination criterion, in particular if it is indicated by the temperature value that the temperature (T) has reached the stabilization temperature (ST).

7. Method (100) according to any one of the preceding claims,
**characterized in that**
during the heating phase (A) for temperature monitoring, a plurality of temperature values are determined by measurements of the temperature (T), so that a temperature rise is determined, wherein a ratio of the evaluation result determined in accordance with step c) to the determined temperature rise is determined in order to determine the stabilization time specification, wherein preferably the stabilization time specification is limited by a maximum duration which is preferably in the range from 100 s to 1000 s, preferably 200 s to 800 s.

8. Method (100) according to any one of the preceding claims,
   **characterized in that**
   during the stabilization phase (C) for temperature monitoring at least one temperature value is determined by at least one measurement of the temperature (T), wherein the subsequent step is provided after step d):

   - performing a change from the stabilization phase (C) to the heating phase (A) if, during the stabilization phase (C), an evaluation of the temperature value satisfies a heating criterion, in particular if a temperature difference between the temperature value and the set temperature (S) exceeds a predetermined threshold value.

9. Method (100) according to any one of the preceding claims,
   **characterized in that**
   during the heating phase (A) and/or during the temperature holding phase (B) and/or during the stabilization phase (C), temperature monitoring is carried out **in that** a plurality of measurements of the temperature (T) are carried out successively in time, preferably at regular intervals, by the temperature sensor (50) in order to determine at least one temperature value in each case, in order to carry out the evaluation according to step c) in particular on the basis of the temperature value and/or in order to determine when the temperature (T) has reached the set temperature (S) and/or the stabilization temperature (ST).

10. Method (100) according to any one of the preceding claims,
    **characterized in that**
    the heating phase (A) and/or the temperature holding phase (B) and/or the stabilization phase (C) is carried out during a preparation of food in order to heat the food in the receiving space (20) to the set temperature (S), wherein the measured temperature (T) is specific for the temperature of the food and deviating from the latter, wherein the stabilization temperature (ST) and/or a stabilization time duration (DT) is determined in such a way that in the stabilization phase (C) an approximation of the temperature of the food to the set temperature (S) occurs at a higher speed than in the temperature holding phase (B).

11. Method (100) according to any one of the preceding claims,
    **characterized in that**
    the stabilization criterion is fulfilled when the evaluation result, preferably a difference between a determined temperature value or one of the determined temperature values, in particular a minimum of the temperature values, and the set temperature (S), exceeds a predefined threshold value, wherein preferably the threshold value is defined independently of food, and preferably the threshold value is in the range from 1 K to 10 K, preferably 2 K to 9 K, preferably 3 K to 8 K, particularly preferably 3.8 K to 7 K, and/or the stabilization temperature (ST) is greater than the set temperature (S) by an offset, wherein the offset is determined by the difference between the set temperature (S) and at least one temperature value determined in the temperature holding phase (B), in particular a minimum of these temperature values, and in particular may correspond at most to a maximum offset in the range from 8 K to 20 K, preferably 10 K to 15 K, preferably 12 K to 14 K.

12. System (200) for adjusting a heating power in a domestic appliance (10), in particular in a food processor (10), comprising:

    - at least one temperature sensor (50) for performing at least one measurement of a temperature (T) at a receiving space (20) of the domestic appliance (10), in particular at a mixing vessel (20) of the food processor (10),
    - at least one control device (80) for controlling at least one heating element (40) of the domestic appliance (10) depending on a heating power adjustment, so that in a heating phase (A) the temperature (T) aims at a predetermined set temperature (S), and in a temperature holding phase (B) a heating power limitation occurs,
    - at least one processing device (60) for evaluating the temperature (T) on the basis of the set temperature (S) at least in the temperature holding phase (B),
    wherein the processing device (60) is adapted to initiate a stabilization phase (C) depending on the evaluation, wherein in the stabilization phase (C) the heating power adjustment is performable such that the temperature (T) aims at a certain stabilization temperature (ST), wherein the stabilization temperature (ST) is greater than the set temperature (S).

13. System (200) according to the preceding claim,

**characterized in that**
the heating element (40) is integrated with the receiving space (20), in particular as a resistance heater in a floor of the receiving space (20), and/or the temperature sensor (50) is designed as an NTC sensor and is integrated with the receiving space (20), and/or the system (200) can be operated according to a method (100) according to one of the preceding claims.

14. Domestic appliance (10) for preparing at least one food,
**characterized in that**
a system (200) according to any one of claims 12 or 13 is provided.

15. Computer program product for adjusting a heating power in a domestic appliance (10), wherein the computer program product is adapted to perform the following steps when executed by a processing device (60) according to a method (100) according to any of claims 1-11:

a) initiating a heating phase (A) with a heating power adjustment such that a temperature (T) at a receiving space (20) of the domestic appliance (10) aims at a predetermined set temperature (S),
b) initiating a temperature holding phase (B) when the temperature (T) has reached the set temperature (S), wherein heating power limitation occurs in the temperature holding phase (B),
c) performing at least one evaluation of the temperature (T) based on the set temperature (S) during the temperature holding phase (B) so that an evaluation result is determined,
d) initiating a stabilization phase (C) when the evaluation result satisfies a stabilization criterion, wherein in the stabilization phase (C) the heating power adjustment occurs in such a way that the temperature (T) aims at a certain stabilization temperature (ST), wherein the stabilization temperature (ST) is greater than the set temperature (S).

**Revendications**

1. Procédé (100) pour régler une puissance de chauffe d'au moins un élément chauffant (40) d'un appareil ménager (10), en particulier d'un robot ménager (10) pour la préparation au moins partiellement automatique des aliments, l'appareil ménager (10) comprenant un capteur de température (50) pour mesurer une température (T) au niveau d'un espace de réception (20) de l'appareil ménager (10),
où les étapes suivantes sont prévues :

a) Exécution d'une phase de chauffage (A) avec un réglage de la puissance de chauffe de telle sorte que la température (T) vise une température de consigne prédéterminée (S),
b) Exécution d'une phase de maintien de la température (B) lorsque la température (T) a atteint la température de consigne (S), la limitation de la puissance de chauffe ayant lieu dans la phase de maintien de la température (B),
c) Exécution d'au moins une évaluation de la température (T) sur la base de la température de consigne (S) pendant la phase de maintien de la température (B), afin de déterminer un résultat d'évaluation,
d) Exécution d'une phase de stabilisation (C) lorsque le résultat d'évaluation satisfait à un critère de stabilisation, dans lequel, dans la phase de stabilisation (C), le réglage de la puissance de chauffe est effectué de telle sorte que la température (T) vise une température de stabilisation (ST) spécifique, la température de stabilisation (ST) étant supérieure à la température de consigne (S).

2. Procédé (100) selon la revendication 1,
**caractérisé en ce que**
la température de stabilisation (ST) est déterminée sur la base du résultat d'évaluation, la température de stabilisation (ST) étant de préférence limitée par un décalage maximal.

3. Procédé (100) selon la revendication 1 ou 2,
**caractérisé en ce que**
pour limiter la puissance de chauffe, la puissance de chauffe est réglée de telle sorte que la puissance de chauffe est limitée à une puissance de chauffe de maintien maximale prédéterminée, la puissance de chauffe étant réglée, en particulier en tant que régulation de la puissance de chauffe, dans la phase de chauffage (A) et/ou la phase de stabilisation (C) de telle sorte que la limitation de la puissance de chauffe est annulée, ou la puissance de chauffe étant réglée dans la phase de stabilisation (C) de telle sorte que la limitation de la puissance de chauffe est limitée à une valeur plus élevée que dans la phase de maintien de la température (B).

4. Procédé (100) selon l'une des revendications précédentes,
   **caractérisé en ce que**
   dans le cas de la limitation de la puissance de chauffe pour la phase de maintien de la température (B), la puissance de chauffe est limitée à une puissance de chauffe de maintien maximale prédéterminée dans la plage de 10 % à 90 %, de préférence de 20 % à 70 %, de préférence de 30 % à 60 %, particulièrement de préférence de 40 % à 50 %, en particulier de 40 %, d'une puissance de chauffe maximale et/ou **en ce que**, dans le cas de la phase de maintien de la température (B) pour la surveillance de la température, une ou plusieurs valeurs de température sont déterminées par au moins une mesure de la température (T) dans lequel, à l'étape c), l'évaluation est effectuée en déterminant une différence entre la valeur de température déterminée ou l'une des valeurs de température déterminées, en particulier un minimum des valeurs de température, et la température de consigne (S), la différence formant de préférence le résultat de l'évaluation .

5. Procédé (100) selon l'une des revendications précédentes,
   **caractérisé en ce que**
   pendant la phase de stabilisation (C), une durée de stabilisation temporelle de l'exécution de la phase de stabilisation (C) est déterminée, l'étape suivante étant prévue après l'étape d) :

   - Exécution d'un changement de la phase de stabilisation (C) à la phase de maintien de la température (B) si la durée de stabilisation temporelle déterminée dépasse une certaine spécification de temps de stabilisation.

6. Procédé (100) selon l'une des revendications précédentes,
   **caractérisé en ce que**
   pendant la phase de stabilisation (C) pour la surveillance de la température, au moins une valeur de température est déterminée par au moins une mesure de la température (T), l'étape suivante étant prévue après l'étape d) :

   - Exécution d'un changement de la phase de stabilisation (C) à la phase de maintien de la température (B) si, pendant la phase de stabilisation (C), une évaluation de la valeur de la température sur la base de la température de stabilisation (ST) satisfait à un critère d'arrêt, en particulier s'il est indiqué par la valeur de la température que la température (T) a atteint la température de stabilisation (ST).

7. Procédé (100) selon l'une des revendications précédentes,
   **caractérisé en ce que**
   pendant la phase de chauffage (A) pour la surveillance de la température, plusieurs valeurs de température sont déterminées par les mesures de la température (T), de sorte qu'une augmentation de la température est déterminée, un rapport entre le résultat d'évaluation déterminé selon l'étape c) et l'augmentation de température déterminée étant déterminé pour déterminer la spécification du temps de stabilisation, la spécification du temps de stabilisation étant de préférence limitée par une durée maximale qui se situe de préférence dans la plage de 100 s à 1000 s, de préférence 200 s à 800 s.

8. Procédé (100) selon l'une des revendications précédentes,
   **caractérisé en ce que**
   pendant la phase de stabilisation (C) pour la surveillance de la température, au moins une valeur de température est déterminée par au moins une mesure de la température (T), l'étape suivante étant prévue après l'étape d) :

   - Exécution d'un changement de la phase de stabilisation (C) à la phase de chauffage (A) si, pendant la phase de stabilisation (C), une évaluation de la valeur de température satisfait à un critère de chauffage, en particulier si une différence de température entre la valeur de température et la température de consigne (S) dépasse une valeur seuil prédéterminée.

9. Procédé (100) selon l'une des revendications précédentes,
   **caractérisé en ce que**
   pendant la phase de chauffage (A) et/ou pendant la phase de maintien de la température (B) et/ou pendant la phase de stabilisation (C), une surveillance de la température est effectuée **en ce que** plusieurs mesures de la température (T) sont effectuées successivement dans le temps, de préférence à intervalles réguliers, par le capteur de température (50) afin de déterminer au moins une valeur de température dans chaque cas, en particulier pour effectuer l'évaluation selon l'étape c) sur la base de la valeur de température et/ou pour déterminer quand la température (T) a atteint la température de consigne (S) et/ou la température de stabilisation (ST).

10. Procédé (100) selon l'une des revendications précédentes,
**caractérisé en ce que**
la phase de chauffage (A) et/ou la phase de maintien de la température (B) et/ou la phase de stabilisation (C) sont effectuées pendant une préparation d'un aliment afin de chauffer l'aliment dans l'espace de réception (20) à la température de consigne (S), la température mesurée (T) étant spécifique à la température de l'aliment et s'écartant de celle-ci, la température de stabilisation (ST) et/ou une durée de stabilisation (DT) étant déterminées de telle sorte que, dans la phase de stabilisation (C), la température de l'aliment soit alignée sur la température de consigne (S) à un rythme plus élevé que dans la phase de maintien de la température (B).

11. Procédé (100) selon l'une des revendications précédentes,
**caractérisé en ce que**
le critère de stabilisation est rempli lorsque le résultat de l'évaluation, de préférence une différence entre une valeur de température déterminée ou l'une des valeurs de température déterminées, en particulier un minimum des valeurs de température, et la température de consigne (S), dépasse une valeur seuil prédéfinie, la valeur seuil étant de préférence définie indépendamment de l'aliment, et de préférence la valeur seuil se situant dans la plage de 1 K à 10 K, de préférence 2 K à 9 K, de préférence 3 K à 8 K, particulièrement de préférence 3,8 K à 7 K, et/ou **en ce que** la température de stabilisation (ST) est supérieure à la température de consigne (S) d'un décalage, le décalage étant déterminé par la différence entre la température de consigne (S) et au moins une valeur de température déterminée dans la phase de maintien de la température (B), en particulier un minimum de ces valeurs de température, et peut en particulier correspondre au maximum à un décalage maximal dans la plage de 8 K à 20 K, de préférence 10 K à 15 K, de préférence 12 K à 14 K.

12. Système (200) de réglage d'une puissance de chauffe dans un appareil ménager (10), en particulier dans un robot ménager (10), comprenant :

- au moins un capteur de température (50) pour effectuer au moins une mesure d'une température (T) sur un espace de réception (20) de l'appareil ménager (10), en particulier sur un récipient de mélange (20) du robot ménager (10),
- au moins un dispositif de commande (80) pour commander au moins un élément chauffant (40) de l'appareil ménager (10) en fonction d'un réglage de la puissance de chauffe, de sorte que dans une phase de chauffage (A), la température (T) vise une température de consigne (S) prédéterminée, et dans une phase de maintien de la température (B), une limitation de la puissance de chauffe a lieu,
- au moins un dispositif de traitement (60) pour évaluer la température (T) sur la base de la température de consigne (S) au moins dans la phase de maintien de la température (B),
dans lequel le dispositif de traitement (60) est adapté pour lancer une phase de stabilisation (C) en fonction de l'évaluation, dans lequel, dans la phase de stabilisation (C), le réglage de la puissance de chauffe peut être effectué de telle sorte que la température (T) vise une certaine température de stabilisation (ST), dans lequel la température de stabilisation (ST) est supérieure à la température de consigne (S).

13. Système (200) selon la revendication précédente,
**caractérisé en ce que**
l'élément chauffant (40) est intégré à l'espace de réception (20), en particulier comme chauffage à résistance dans un plancher de l'espace de réception (20), et/ou **en ce que** le capteur de température (50) est conçu comme sonde NTC et est intégré à l'espace de réception (20), et/ou **en ce que** le système (200) peut être exploité selon un procédé (100) selon l'une des revendications précédentes.

14. Appareil ménager (10) pour la préparation d'au moins un aliment,
**caractérisé en ce que**
un système (200) selon l'une des revendications 12 ou 13 est prévu.

15. Programme informatique pour régler la puissance de chauffe d'un appareil ménager (10), le programme informatique étant adapté pour exécuter les étapes suivantes lorsqu'il est exécuté par un dispositif de traitement (60) selon un procédé (100) selon l'une des revendications 1 à 11 :

a) Lancement d'une phase de chauffage (A) avec un réglage de la puissance de chauffe de telle sorte qu'une température (T) dans un espace de réception (20) de l'appareil ménager (10) vise une température de consigne prédéterminée (S),

b) Lancement d'une phase de maintien de la température (B) lorsque la température (T) a atteint la température de consigne (S), une limitation de la puissance de chauffe ayant lieu dans la phase de maintien de la température (B),

c) Exécution d'au moins une évaluation de la température (T) sur la base de la température de consigne (S) pendant la phase de maintien de la température (B), afin de déterminer un résultat d'évaluation,

d) Lancement d'une phase de stabilisation (C) si le résultat de l'évaluation remplit un critère de stabilisation, dans lequel, dans la phase de stabilisation (C), le réglage de la puissance de chauffe se fait de telle sorte que la température (T) vise une température de stabilisation (ST) déterminée, la température de stabilisation (ST) étant supérieure à la température de consigne (S).

**Fig. 1**

**Fig. 2**

EP 3 482 661 B1

**Fig. 3**

EP 3 482 661 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2388564 A1